# EUROPÄISCHE PATENTSCHRIFT

(11) **EP 1 668 817 B1**
(45) Veröffentlichungstag und Bekanntmachung des Hinweises auf die Patenterteilung: **07.05.2014**
(21) Anmeldenummer: 04764061.0
(22) Anmeldetag: 12.08.2004
(51) Int. Cl.: H04L 9/06

(54) **Verfahren und Vorrichtung zur Ver- und Entschlüsselung**
Encryption and decryption method and device
Procédé et dispositif de chiffrement et de déchiffrement

(30) Priorität: 30.09.2003 DE 10345457
(43) Veröffentlichungstag der Anmeldung: 14.06.2006
(73) Patentinhaber: Infineon Technologies AG, 85579 Neubiberg (DE)
(72) Erfinder: GÖTTFERT, Rainer, 82024 Taufkirchen (DE); HESS, Erwin, 85521 Ottobrunn (DE); MEYER, Bernd, 81739 München (DE); SONNEKALB, Steffen, 82024 Taufkirchen (DE)
(74) Vertreter: Schenk, Markus
(86) Internationale Anmeldenummer: PCT/EP2004/009062
(87) Internationale Veröffentlichungsnummer: WO 2005/043804

(56) Entgegenhaltungen:
- US-A- 5 870 479
- MENEZES, OORSCHOT, VANSTONE: "HANDBOOK OF APPLIED CRYPTOGRAPHY, PASSAGE" CRC PRESS SERIES ON DISCRETE MATHEMATICS AND ITS APPLICATIONS, CRC PRESS, 1997, Seiten 6-16, XP002309005 BOCA RATON, FL, USA ISBN: 0-8493-8523-7
- SCHNEIER B: "APPLIED CRYPTOGRAPHY. PROTOCOLS, ALGORITHMS, AND SOURCE CODE IN C, PASSAGE" JOHN WILEY & SONS, 1996, Seiten 220-222, XP002309006 NEW YORK, USA ISBN: 0-471-11709-9
- OYAIZU I ET AL: "A single-chip encryption processor for ISDN multimedia communications" ASIC CONFERENCE AND EXHIBIT, 1991. PROCEEDINGS., FOURTH ANNUAL IEEE INTERNATIONAL ROCHESTER, NY, USA 23-27 SEPT. 1991, NEW YORK, NY, USA,IEEE, US, 23. September 1991 (1991-09-23), Seiten P18-5, XP010048506 ISBN: 0-7803-0101-3

## Beschreibung

Die vorliegende Erfindung bezieht sich allgemein auf ein Ver/Entschlüsselungsschema, wie es beispielsweise zum Schutz von Speicherinhalten gegen unberechtigtes Auslesen anwendbar ist.

Bei einer gegen unberechtigtes Ausspähen gesicherten Datenspeicherung werden die zu speichernden Daten nicht im Klartext, d.h. unverschlüsselt, sondern in verschlüsselter Form abgespeichert, als sogenanntes Chiffrat oder sogenannter Chiffretext. Wenn die Daten zu einem späteren Zeitpunkt gelesen werden sollen, müssen sie deshalb naturgemäß wieder entschlüsselt werden, bevor sie weiterverarbeitet werden können. Beispiele für Anwendungen, bei denen sich dieser Aufwand zur Abspeicherung lohnt, sind vielfältig und umfassen beispielsweise Chipkarten, Smartcards oder Magnetkarten, auf denen beispielsweise zu schützende Informationen, wie Geldbeträge, Schlüssel, Kontonummern usw., vor einem unberechtigten Zugriff geschützt werden sollen.

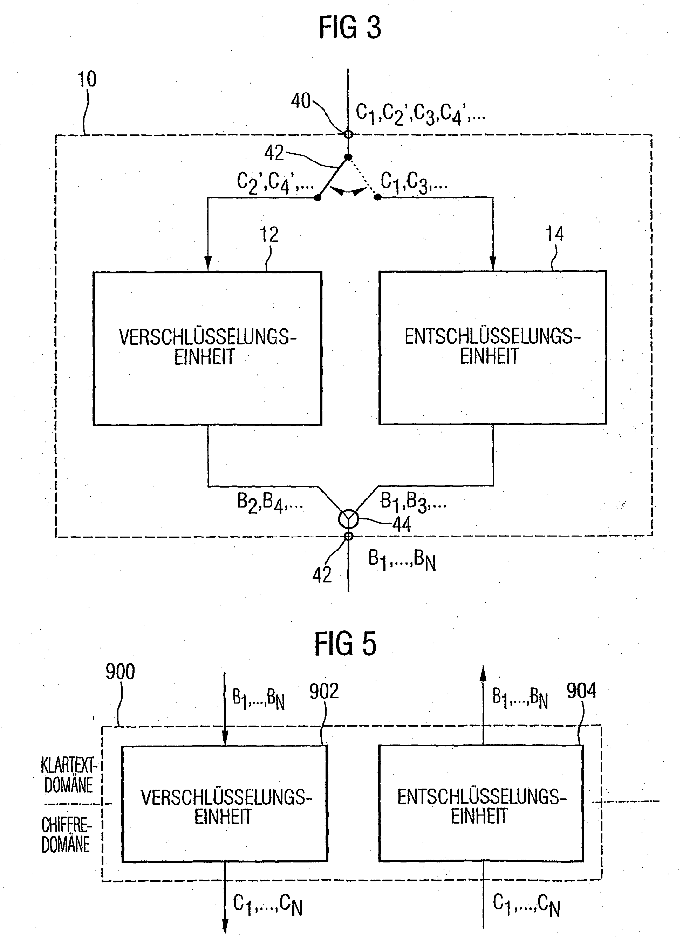

Fig. 5 veranschaulicht noch einmal den Sachverhalt. Zu schützende Daten werden, um sie nicht ungeschützt potentiellen Angreifern auszuliefern, in verschlüsselter Form gespeichert, in Fig. 5 als Chiffre-Domain bezeichnet. Außerhalb der Chiffre-Domain liegen die zu schützenden Daten im Klartext vor, in Fig. 5 als Klartext-Domain bezeichnet. Die Grenze zwischen Klartext- und Chiffre-Domain ist in Fig. 5 mit einer Strichpunktlinie angezeigt. Eine Schnittstelle zwischen Klartext- und Chiffre-Domain bildet eine Ver-/Entschlüsselungsvorrichtung 900. Die Ver-/Entschlüsselungsvorrichtung 900 ist dazu da, zu speichernde, unverschlüsselte Daten aus der Klartext-Domain zu verschlüsseln und in verschlüsselter Form zur Speicherung an die Chiffre-Domain auszugeben, und umgekehrt, bei Abruf oder Auslesen dieser Daten, wiederum die nun in verschlüsselter Form vorliegenden, auszulesenden Daten zu entschlüsseln, um sie in Klartext an die Klartext-Domain auszugeben. Das zugrundeliegende Verschlüsselungsschema ist eine symmetrische Verschlüsselung, d.h. eine bei der die inverse Verschlüsselung, d.h. die Entschlüsselung, mit in etwa dem gleichen Aufwand ausgeführt werden kann wie die Verschlüsselung. Die Ver-/Entschlüsselungsvorrichtung 900 besteht deshalb aus zwei in etwa gleich großen bzw. in ihrer Implementation gleich aufwendigen Teilen, nämlich einer Verschlüsselungseinheit bzw. einem Verschlüsselungsteil 902 und einer Entschlüsselungseinheit bzw. einem Entschlüsselungsteil 904. Die Verschlüsselungseinheit 902 bildet Daten an einem Verschlüsselungseingang derselben nach einem bestimmten Verschlüsselungsalgorithmus blockweise auf verschlüsselte Daten ab und gibt diese an einem Verschlüsselungsausgang derselben aus. In der Vorrichtung 900 ist die Verschlüsselungseinheit 902 derart vorgesehen, dass sie zu speichernde Datenblöcke B₁, ..., B_{N}, mit N ∈ IN, die im Klartext vorliegen, an seinem Verschlüsselungseingang empfängt, so dass die Verschlüsselungseinheit 902 am Verschlüsselungsausgang verschlüsselte Datenblöcke C₁, ..., C_{N} ausgibt, das sog. Chiffrat. Die Entschlüsselungseinheit 904 ist für die umgekehrte Richtung zuständig, nämlich eben nicht für das Speichern von Daten sondern für das Auslesen von Daten von dem Speicher in der Chiffre-Domain in die Klartext-Domain. Dementsprechend ist die Entschlüsselungseinheit 904 ausgebildet, um Daten an ihrem Entschlüsselungseingang gemäß einem Entschlüsselungsalgorithmus auf entschlüsselte Daten abzubilden, der zu dem Verschlüsselungsalgorithmus der Verschlüsselungseinheit 902 invers ist, und diese entschlüsselten Daten an einem Entschlüsselungsausgang derselben ausgibt. In der Vorrichtung 900 ist die Entschlüsselungseinheit 904 so vorgesehen, dass sie in verschlüsselter Form gespeicherte, auszulesende Datenblöcke C₁, ..., C_{N} am Dateneingang empfängt, dieses Chiffrat C₁, ... , C_{N} blockweise entschlüsselt und am Entschlüsselungsausgang die Datenblöcke B₁, ..., B_{N} im Klartext an die Klartext-Domain ausgibt.

Der Nachteil an der Ver-/Entschlüsselungsvorrichtung 900 von Fig. 5 besteht nun in Folgendem. Bei dem Einsatz in Verbindung mit einem Mikroprozessor werden Daten zu einem bestimmten Zeitpunkt entweder verschlüsselt, nämlich beim Schreibvorgang, oder sie werden entschlüsselt, nämlich beim Lesevorgang. Daher ist, wenn überhaupt, von der Ver-/Entschlüsselungsvorrichtung 900 zu einem Zeitpunkt stets nur die Hälfte ihrer Hardware im Betrieb, während die andere brach liegt. Nur der Verschlüsselungsteil 902, nämlich wenn geschrieben und somit verschlüsselt wird, oder der Entschlüsselungsteil 904, wenn gelesen und somit entschlüsselt wird, ist aktiv, aber niemals beide gleichzeitig.

Obwohl es nun Anwendungen geben mag, bei denen diese Vorgehensweise kein Problem darstellt, da die Stückzahlen gering sind, so dass der erhöhte Chipflächenaufwand für das Vorsehen der nie gleichzeitig arbeitenden Verschlüsselungseinheit auf der einen und Entschlüsselungseinheit auf der anderen Seite zumutbar ist, wäre es bei Massenartikeln, wie z.B. Chipkarten, Smartcards usw., wünschenswert, eine effektivere Form eines Ver-/Entschlüsselungsschemas zu besitzen, die die vorhandene Hardware besser ausnützt, so dass der hohe Chipflächenaufwand durch einen anderen Vorteil gerechtfertigt wäre.

Das Dokument US 5 870 479 A (DE LANGE MARTIN KLAAS ET AL) 9. Februar 1999 (1999-02-09) offenbart eine Ver/Entschlüsselungsvorrichtung, die eine Verschlüsselungseinheit und eine Entschlüsselungseinheit aufweist. Die Verschlüsselungseinheit und die Entschlüsselungseinheit werden gleichzeitig, d.h. zeitlich überlappend, eingesetzt, indem eine Steuereinrichtung einen Teil der zu verarbeitenden Daten der Verschlüsselungseinheit und einen anderen Teil der Entschlüsselungseinheit zuführt. Die Datenblöcke, die abwechselnd der Verschlüsselungs- bzw. der Entschlüsselungseinheit zugeführt werden, können einer einzigen Datenverbindung bzw. Kanal entsprechen.

Die Aufgabe der vorliegenden Erfindung besteht folglich darin, ein Ver-/Entschlüsselungsschema bereitzustellen, nach welchem es möglich ist, Ver- und Entschlüsselung bei im wesentlichen gleichem Implementationsaufwand zeitunaufwendiger durchzuführen.

Diese Aufgabe wird durch Vorrichtungen gemäß Anspruch 1, 7 oder 8 oder Verfahren gemäß Anspruch 9 oder 10 gelöst.

Die Erkenntnis der vorliegenden Erfindung besteht darin, dass im Grunde genommen es der Sicherheit einer Verschlüsselung keinen Abbruch tut, wenn zur Verschlüsselung ein vorbestimm-ter Verschlüsselungsalgorithmus oder ein zu demselben inverser Entschlüsselungsalgorithmus verwendet wird. Sowohl die Anwendung eines Verschlüsselungsalgorithmus als auch die Anwendung eines zu demselben inversen Entschlüsselungsalgorithmus auf ein Datum führen zu demselben Ergebnis, nämlich dass das Ver- bzw. Entschlüsselungsergebnis, d.h. das Chiffrat, nur mit sehr hohem Aufwand einem potentiellen Angreifer Rückschlüsse auf das ursprüngliche Datum zulässt.

Dies in Betracht ziehend, war es nun eine weitere Erkenntnis der vorliegenden Erfindung, dass diese gleiche Eignung sowohl des Ver- als auch des dazu inversen Entschlüsselungsalgorithmus als Verschlüsselungsdefinition es ermöglicht, Verschlüsselungseinheit und Entschlüsselungseinheit einer Ver-/Entschlüsselungsvorrichtung beide und zwar sogar gleichzeitig, d.h. zeitlich überlappend, bei einem Verschlüsselungsvorgang einzusetzen, wenn ein Teil der zu verschlüsselnden Daten der Verschlüsselungseinheit zugeführt wird, während der andere Teil der Entschlüsselungseinheit zugeführt wird. Das Ergebnis sind verschlüsselte Daten bzw. ist ein Chiffrat, dessen Teile lediglich auf verschiedene Weise "verschlüsselt" worden sind. Bei der Entschlüsselung, wie z.B. bei dem Laden von verschlüsselten Daten von einem Speicher, muss lediglich durch geeignete Vorschriften sichergestellt werden, dass diejenigen Teile, die durch die Verschlüsselungseinheit verschlüsselt worden sind, durch die Entschlüsselungseinheit wieder entschlüsselt werden, während die anderen Teile, die durch die Entschlüsselungseinheit "verschlüsselt" worden sind, durch die Verschlüsselungseinheit "entschlüsselt" werden. In diesem Sinne kann die Verschlüsselungseinheit neutral auch als eine erste Abbildungseinrichtung mit einer ersten Abbildung und die Entschlüsselungseinheit als eine zweite Abbildungseinrichtung mit einer dazugehörigen zu der ersten inversen Abbildung betrachtet werden.

Da nun Verschlüsselungseinheit und Entschlüsselungseinheit bzw. Verschlüsselungsalgorithmus und Entschlüsselungsalgorithmus bei sowohl Verschlüsselung als auch Entschlüsselung zeitlich überlappend nebeneinander und nicht nur wie früher einzeln verwendet werden können, kann die Datendurchsetzrate sowohl bei Ver- als auch bei Entschlüsselung verdoppelt werden. Die Sicherheit der Daten durch das erfindungsgemäße Ver-/Entschlüsselungsschema verringert sich bei dieser Vorgehensweise überraschenderweise nicht. Insbesondere bei der Speicher-Chiffrierung bzw. -Dechiffrierung bzw. Speicherver- und -entschlüsselung bildet eine verdoppelte Datendurchsatzrate eine enorme Performance-Steigerung.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Zeichnung einer Ver-/Entschlüsselungsvorrichtung gemäß einem Ausführungsbeispiel der vorliegenden Erfindung zur Veranschaulichung ihrer Funktionsweise vor dem Hintergrund einer Verschlüsselung;
- Fig. 1a: eine schematische Zeichnung zur Veranschaulichung der zeitlich überlappenden Betriebsweise der Verschlüsselungs- und Entschlüsselungseinheit der Ver-/Entschlüsselungsvorrichtung von Fig. 1;
- Fig. 2b: eine schematische Zeichnung zur Veranschaulichung der zeitlichen Verarbeitung bei der Verschlüsselung gemäß der Ver-/Entschlüsselungsvorrichtung von Fig. 1;
- Fig. 3: eine schematische Zeichnung der Ver-/Entschlüsselungsvorrichtung von Fig. 1 zur Veranschaulichung ihrer Funktionsweise vor dem Hintergrund einer Entschlüsselung;
- Fig. 4: ein Blockschaltbild einer Ver-/Entschlüsselungsvorrichtung zur Speicherverschlüsselung gemäß einem Ausführungsbeispiel der vorliegenden Erfindung; und
- Fig. 5: ein Blockschaltbild einer Ver-/Entschlüsselungsvorrichtung mit getrennter arbeitender Verschlüsselungseinheit zur Verschlüsselung und Entschlüsselungseinheit zur Entschlüsselung.

Die nachfolgenden anhand der Figuren beschriebenen Ausführungsbeispiele gehen davon aus, dass dem Verschlüsselungsschema ein Block-Chiffre-Schema zugrunde liegt, d.h. ein Schema, bei dem zu verschlüsselnde Daten blockweise verschlüsselt werden, also in Datenblöcke gegliedert werden, und diese gemäß einer bestimmten Verschlüsselungstransformation bzw. Verschlüsselungsabbildung auf verschlüsselte Datenblöcke blockweise abgebildet werden. Diese Block-Chiffre-Schemata werden auch als Substitutions-Chiffren bezeichnet. Die vorliegende Erfindung ist jedoch nicht auf solche Block-Chiffre-Schemata begrenzt oder auch nicht auf Symmetrische-Schlüssel-Verschlüsselungen, bei denen Ver- und Entschlüsselungsschlüssel des Verschlüsselungs- und Entschlüsselungsteils gleich sind. Wesentlich ist lediglich, dass die Entschlüsselungsabbildung des Entschlüsselungsteils zu der Verschlüsselungsabbildung des Verschlüsselungsteils invers ist. Sei beispielsweise der Vektor x̅ der zu verschlüsselnde Datenblock. x̅ kann jeden Wert annehmen, wobei x̅ ∈ X. **E** sei die Verschlüsselungsabbildung. E bildet alle x̅ ∈ X auf verschlüsselte Datenblöcke y̅ ∈ Y ab und ist vorzugsweise eine hochgradig nichtlineare Abbildung. Die Datenblöcke x̅ können n-Bit-Datenblöcke sein, die durch E auf m-Bit-Datenblöcke y̅ abgebildet werden, mit m,n ∈ IN, wobei m größer n sein kann oder m=n. Es kann auch n>m sein, wenn nur 2^{m} der 2ⁿ möglichen n-Bit-Datenblöcke erlaubt sind. Die Entschlüsselungsabbildung D, die auf der Bildmenge E(x̅)∈Y definiert ist und nach X abbildet, sei dann diejenige Abbildung von Y auf X für die gelte: D(E(x̅))=x̅ für alle x̅ ∈ X. Gleichzeitig gilt dann, **E**(**D**(**E**(x̅)))=**E**(x̅) für alle x̅ ∈ X. Es sei erwähnt, dass es nicht notwendig ist, dass X und Y die gleichen Räume seien, oder dass E eine bijektive Abbildung ist. In anderen Worten ausgedrückt, muss lediglich gegeben sein, dass die Entschlüsselungsabbildung ein verschlüsseltes Datum, das durch die Verschlüsselungsabbildung aus einem Ursprungsdatum erhalten wurde, wieder auf das Ursprungsdatum abbildet, und zwar dies für alle erlaubten Ursprungsdaten aus X. Freilich sollte vorzugsweise **E** unterschiedlich zu **D** sein, d.h. **E** sollte nicht selbstinvertierend sein.

Bevor Bezug nehmend auf die Zeichnungen die vorliegende Erfindung anhand von Ausführungsbeispielen näher erläutert wird, wird darauf hingewiesen, dass in den Figuren identische oder ähnliche Elemente mit identischen oder ähnlichen Bezugszeichen versehen sind, und dass eine wiederholte Beschreibung dieser Elemente im folgenden vermieden wird.

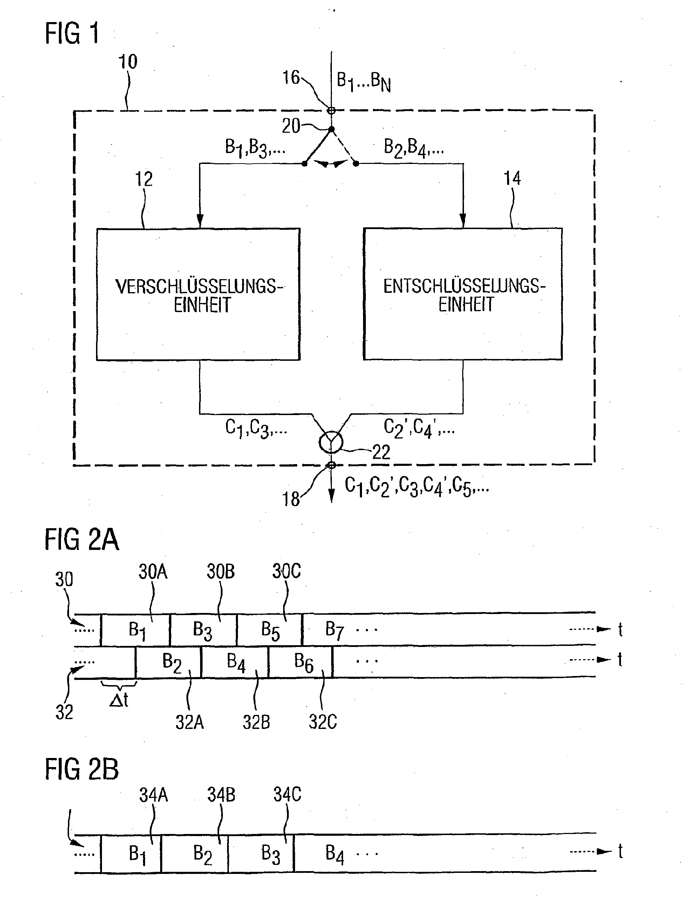

Fig. 1 zeigt den in Hinblick auf die Verschlüsselung relevanten Teil einer Ver-/Entschlüsselungsvorrichtung 10 gemäß einem Ausführungsbeispiel der vorliegenden Erfindung. Die Ver-/Entschlüsselungsvorrichtung 10 umfasst eine Verschlüsselungseinheit bzw. einen Verschlüsselungsteil 12 und eine Entschlüsselungseinheit bzw. einen Entschlüsselungsteil 14. Ferner umfasst die Vorrichtung 10 einen Dateneingang 16 zum Empfang zu verschlüsselnder Datenblöcke B₁, ..., B_{N} mit N ∈ |N und einen Datenausgang 18 zur Ausgabe entsprechend verschlüsselter Datenblöcke. Die Vorrichtung 10 umfasst ferner einen Schalter 20, wie z.B. einen Multiplexer, der zwischen den Dateneingang 16 und einen Verschlüsselungseingang der Verschlüsselungseinheit 12 einerseits und den Dateneingang 16 und einen Entschlüsselungseingang der Entschlüsselungseinheit 14 andererseits geschaltet ist, um auf gesteuerte Weise, wie sie im folgenden noch detaillierter erörtert werden wird, die zu verschlüsselnden Datenblöcke B₁ ... B_{N} an die Verschlüsselungseinheit 12 oder die Entschlüsselungseinheit 14 zu verteilen. Ein Datenausgang der Verschlüsselungseinheit 12 und ein Datenausgang der Entschlüsselungseinheit 14 sind mit jeweils einem Eingang einer Vereinigungseinrichtung 22 verbunden, deren Ausgang wiederum mit dem Datenausgang 18 verbunden ist. Die Vereinigungseinrichtung 22 vereinigt die das Verschlüsselungsergebnis bzw. Entschlüsselungsergebnis darstellenden Datenblöcke von der Verschlüsselungseinheit 12 bzw. der Entschlüsselungseinheit 14 zu einem einheitlichen Ausgangsdatenblockstrom und gibt denselben an den Datenausgang 18 aus.

Nachdem im vorhergehenden der Aufbau der Ver-/Entschlüsselungsvorrichtung 10 in Hinblick auf den für die Verschlüsselung relevanten Teil beschrieben worden ist, wird im folgenden dessen Funktionsweise bei der Verschlüsselung der zu verschlüsselnden Datenblöcke B₁ ... B_{N} beschrieben. Die Datenblöcke B₁ ... B_{N} werden dem Dateneingang 16 als ein Klartext-datenstrom seriell zugeführt, und zwar zuerst B₁, dann B₂, usw. Der Schalter 20 wird gesteuert, um ankommende Datenblöcke abwechselnd der Verschlüsselungs- oder der Entschlüsselungseinheit 12 bzw. 14 zuzuführen. Welchen der Datenblöcke sie an welche der beiden Einheiten 12 oder 14 weiterleitet, ist durch eine geeignete Vorschrift festgelegt und hängt beispielsweise von der Anwendungsumgebung ab, in der die Ver-/Entschlüsselungsvorrichtung 10 verwendet wird. Wird die Ver-/Entschlüsselungsvorrichtung 10 beispielsweise zur verschlüsselten Speicherung verwendet, kann es beispielsweise sein, dass die Datenblöcke B₁ ... B_{N} stets eine feste Anzahl adressierbarer Einheiten sind, aus denen sich die Seiten eines seitenweise organisierten Speichers zusammensetzen. Wird eine Seite gespeichert, so wird die feste Anzahl an Datenblöcken einer Seite der Ver-/Entschlüsselungsvorrichtung 10 in einer vorbestimmten Reihenfolge zugeführt. In diesem Fall leitet der Schalter 20 beispielsweise stets den ersten Datenblock zunächst an die Verschlüsselungseinheit 12, den zweiten Datenblock B₂ an die Entschlüsselungseinheit 14, den dritten Datenblock B₃ an die Verschlüsselungseinheit 12 usw., wie es auch in Fig. 1 dargestellt ist. Beim Auslesen dieser Seite ist wegen der festen Reihenfolge bei der Abspeicherung der Seite und der festen Vorgabe, den ersten der Datenblöcke durch die Verschlüsselungseinheit 12 verschlüsselt zu haben, bei Entschlüsselung die verwendete Verteilungsreihenfolge wieder bekannt, d.h. welcher Datenblock auf welche Weise "verschlüsselt worden ist", wie es im folgenden noch näher erörtert werden wird.

Freilich ist es auch bei anderen Anwendungen möglich, geeignete Protokolle zwischen der Ver-/Entschlüsselungsvorrichtung 10 und der externen Vorrichtung (nicht gezeigt) die mit ihrem Dateneingang 16 verbunden ist, oder dergleichen auszunutzen, um bei Entschlüsselung wieder für geeignete Transparenz dafür zu sorgen, welcher Datenblock bei Verschlüsselung welcher der Einheiten 12 bzw. 14 zugeführt worden ist.

Effektiv teilt damit der Schalter 20 die zu verschlüsselnden Daten B₁ ... B_{N} in zwei, vorzugsweise in etwa gleich große Teile auf, nämlich B₁, B₃, ... bzw. B₂, B₄, .... , von denen die ersteren der Verschlüsselungseinheit 12 und zweiten der Entschlüsselungseinheit 14 zuführt.

Die Verschlüsselungseinheit 12 und die Entschlüsselungseinheit 14 verarbeiten nun die ihnen an ihren Eingängen zugeführten Datenblöcke blockweise, um dieselben auf ein Verschlüsselungsergebnis bzw. ein Entschlüsselungsergebnis darstellende Datenblöcke abzubilden und an ihrem jeweiligen Datenausgang auszugeben. Genauer ausgedrückt, bildet die Verschlüsselungseinheit 12 jeden Datenblock Bᵢ an ihrem Verschlüsselungseingang gemäß einer Verschlüsselungsabbildung **E** (E für encryption) auf einen ein Verschlüsselungsergebnis darstellenden Datenblock Cᵢ ab, mit 1≤i≤N. Die von der Verschlüsselungseinheit 12 auf den Empfang der Datenblöcke B₁, B₃, ... hin ausgegebenen, das jeweilige Verschlüsselungsergebnis darstellenden Datenblöcke sind in Fig. 1 mit C₁, C₃, ... dargestellt. Anders ausgedrückt, gilt C₁ = **E** (B₁), C₃ = **E** (B₃), usw. in Bezug auf diesen Teil des zu verschlüsselnden Datenstroms B₁ ... B_{N} besteht folglich im Ergebnis, nämlich den verschlüsselten Datenblöcken, kein Unterschied zu der Ver-/Entschlüsselungsvorrichtung von Fig. 5.

Den anderen Teil des zu verschlüsselnden Datenstroms B₁ ... B_{N} leitet nun aber der Schalter 20, wie im vorhergehenden beschrieben, an die Entschlüsselungseinheit 14 weiter. Die Entschlüsselungseinheit 14 bildet jeden an ihrem Entschlüsselungseingang ankommenden Datenblock gemäß einer Entschlüsselungsabbildung **D** (D für decryption) auf einen ein Entschlüsselungsergebnis darstellenden Datenblock ab und gibt diesen an ihrem Entschlüsselungsausgang aus. Wie in Fig. 1 gezeigt ergibt sich aus den Datenblöcken B₂, B₄, ... am Entschlüsselungseingang am Entschlüsselungsausgang der Entschlüsselungseinheit 14 eine Folge von Datenblöcken C₂-, C_{4'}, ... Mit C₂ = **D** (B₂), C_{4'} = **D** (B₄) , .... Die Entschlüsselungsabbildung **D** ist, wie im vorhergehenden bereits erwähnt, eine zu der Verschlüsselungsabbildung **E** inverse Abbildung, was bedeutet, dass dieselbe einen Datenblock, auf den die Verschlüsselungsabbildung einen Ursprungsdatenblock abbildet, stets wieder zurück auf den Ursprungsdatenblock abbildet.

In Bezug auf diesen Zweig bzw. in Bezug auf diesen Teil des zu verschlüsselnden Datenstroms unterscheidet sich folglich im Ergebnis die Verschlüsselung nach Fig. 1 von derjenigen von Fig. 5. Anstatt der Entschlüsselungseinheit 14 lediglich verschlüsselte Datenblöcke zuzuführen, um die Verschlüsselung durch die Verschlüsselungseinheit 12 rückgängig zu machen, wie es üblich ist, wird die Entschlüsselungseinheit 14 in der Ver-/Entschlüsselungsvorrichtung 10 auf unverschlüsselte Datenblöcke B₂, B₄, ... angewendet, was effektiv einer "Verschlüsselung" gleicht, weshalb die ausgegebenen Datenblöcke der Entschlüsselungseinheit 14 in Fig. 1 auch mit Cᵢ' bezeichnet sind mit "C" für Chiffre, wobei der Apostroph die unorthodoxe Umdefinition der Entschlüsselungsabbildung als Verschlüsselungsabbildung andeutet.

Die von den Einheiten 12 und 14 ausgegebenen Datenblöcke C₁, C₂', C₃, C₄' usw. werden durch die Vereinigungseinrichtung 22 zu einem einheitlichen Chiffre-Datenstrom vereinigt und am Ausgang 18 der Vorrichtung 10 ausgegeben, wie z.B. an einen Speicher oder aber an eine Übertragungsstrecke zu einem Kommunikationspartner mit einer der Vorrichtung 10 entsprechenden Vorrichtung.

Nachdem im vorhergehenden Bezug nehmend auf Fig. 1 die Funktionsweise der Vorrichtung 10 in Hinblick auf die Verschlüsselung eines Eingangsdatenstromes aus Datenblöcken B₁ ... B_{N} in Hinblick auf das Verschlüsselungsgesamtergebnis bzw. das Chiffrat C₁, C₂', C₃, C₄', usw. beschrieben worden ist, wird im folgenden noch näher auf den zeitlichen Ablauf bei der Verarbeitung der eingehenden Datenblöcke B₁ ... B_{N} eingegangen, um die Vorteile der Vorrichtung 10 von Fig. 1 über derjenigen von Fig. 5 besser veranschaulichen zu können, wobei hierzu auf die Fig. 2a und 2b Bezug genommen wird.

Fig. 2a zeigt schematisch den zeitlichen Ablauf der Datenblockverarbeitung in der Vorrichtung 10 von Fig. 1, oder genauer ausgedrückt, wann welche der Verschlüsselungseinheiten 12 bzw. 14 welchen der Eingangsdatenblöcke Bᵢ verarbeitet, um denselben gemäß der Ver- bzw. Entschlüsselungsabbildung abzubilden. Fig. 2a zeigt in einer oberen Zeile 30 hierzu zunächst entlang einer horizontalen Zeitachse t durch Blöcke 30a, 30b, 30c usw. die zeitliche Abfolge der Verarbeitung der Eingangsdatenblöcke Bᵢ an, indem jeder Zeitblock 30a-30c mit B₁, B₃, B₅ usw. beschriftet ist. Die Zeitachse t läuft von links nach rechts. Datenblöcke, die in Zeitblöcken 30a-30c weiter links verarbeitet werden, werden also zeitlich früher von der Verschlüsselungseinheit 12 verarbeitet, als solche in Zeitblöcken weiter rechts. In Fig. 2a ist die Verarbeitung der der Verschlüsselungseinheit 12 zugeführten Datenblöcke B₁, B₃, B₅, B₇ usw. so dargestellt worden, als ob ihre Verarbeitung jeweils dieselbe Zeitdauer in Anspruch nähme, und ihre Verarbeitung ohne Pausen unmittelbar aufeinander folge.

In einer Zeile 32 darunter zeigt Fig. 2a Zeitblöcke 32a, 32b und 32c, in denen die der Entschlüsselungseinheit 14 zugeführten Datenblöcke B₂, B₄ usw. verarbeitet werden, wobei jeder Zeitblock 32a-32c wiederum mit dem jeweiligen Datenblock beschriftet ist, der in dem jeweiligen Zeitblock verarbeitet wird. Auch in dieser Zeile läuft die Zeitachse t von links nach rechts, so dass weiter links liegende Zeitblöcke zeitlich früher stattfinden als weiter rechts liegende. Wie es aus Fig. 2a ersichtlich wird, wird auch für die Entschlüsselung 114 angenommen, dass der Entschlüsselungsvorgang für jeden ankommenden Datenblock B₂, B₄ usw. in etwa dieselbe Zeit in Anspruch nimmt, und auch dieselbe Zeit wie die Verschlüsselung, und dass die Verarbeitung der von der Entschlüsselungseinheit 14 empfangenen Datenblöcke unmittelbar aufeinander folgt.

Wie sich aus Fig. 2a ohne weiteres ergibt, ermöglicht der Einsatz beider Verschlüsselungseinheiten 12 und 14, um die eingehenden Datenblöcke zu verschlüsseln, die gesamte Zeitdauer, die zur Verschlüsselung aller eingehenden Datenblöcke B₁ ... B_{N} benötigt wird, im wesentlichen zu halbieren. Dies liegt daran, dass die Entschlüsselungseinheit 14 nicht brach liegt, während die Verschlüsselung durchgeführt wird, sondern parallel zur Verschlüsselungseinheit 12 arbeitet.

Im Vergleich zu dem zeitlich überlappenden Betrieb der Verschlüsselungseinheit und der Entschlüsselungseinheit 12 und 14 bei der Verschlüsselung in der Vorrichtung 10 zeigt Fig. 2b den zeitlichen Ablauf bei der Verarbeitung bei einer Verschlüsselung für die Vorrichtung von Fig. 5. Fig. 2b zeigt in einer Zeile 34 zeitlich aufeinanderfolgende Zeitblöcke 34a, 34b, 34c usw. Die Zeitachse t läuft auch hier von links nach rechts, so dass Zeitblöcke weiter links früher als Zeitblöcke weiter rechts stattfinden. Die Zeitblöcke sind mit B₁, B₂, B₃ als den der Verschlüsselungseinheit 902 zugeführten, zu verschlüsselnden Datenblöcken B₁, ..., B_{N} beschriftet, um zu veranschaulichen, in welchem Zeitblock die Verschlüsselungseinheit 902 welchen Datenblock verschlüsselt. In Fig. 2 wurde angenommen, dass die Verschlüsselungseinheit 902 für jeden zu verschlüsselnden Datenblock dieselbe Zeitdauer benötigt und zwar genauer dieselbe Zeitdauer, die auch die Verschlüsselungseinheit 12 und die Entschlüsselungseinheit 14 von Fig. 1 benötigt. Auch die Verschlüsselungseinheit 902 verarbeitet nach dem Beispiel von Fig. 2b die eingehenden Datenblöcken unmittelbar aufeinanderfolgend.

Wie es zu erkennen ist, hat jedoch die Verschlüsselungseinheit 902 von Fig. 5 doppelt so viele Datenblöcke zu verschlüsseln als die Verschlüsselungseinheit 12. Die Zeitdauer zur Verschlüsselung eingehender Datenblöcke B₁, ..., B_{N} ist folglich für die Vorrichtung von Fig. 5 doppelt so lange wie die von Fig. 1.

Wieder zurückkehrend zu Fig. 2a wird darauf hingewiesen, dass dort zwar der zeitliche Versatz Δₜ zwischen der Verarbeitung eines Datenblocks durch die Verschlüsselungseinheit 12 und des jeweils darauffolgenden Datenblocks durch die Entschlüsselungseinheit 14 so dargestellt worden ist, als ob dieser Zeitversatz die Hälfte der Zeitdauer zur Verarbeitung eines Zeitblockes 30a bzw. 32a betrüge, dass dies aber nicht zwingend so sein muss.

Die Verbindung, die den Dateneingang 16 der Vorrichtung 10 mit der die zu verschlüsselnden Datenblöcke B₁ ... B_{N} sendenden externen Vorrichtung (nicht gezeigt) verbindet, und auf der die Datenblöcke B₁ ... B_{N} seriell übertragen werden, kann beispielsweise der externe Bus eines 88er-Mikrocontrollers mit seinem speziellen Bus-Timing sein oder aber auch ein Standardbussystem, so dass der Versatz Δₜ vom Bus-Timing abhinge. Es könnte beispielsweise sein, dass die Vorrichtung 10 durch ein Freigabe-Signal der externen Vorrichtung mitteilt, wann die Einheit, die den nächsten zu verschlüsselnden Datenblock zu verarbeiten hat, d.h. die Verschlüsselungseinheit 12 oder die Entschlüsselungseinheit 14, zur nächsten Verarbeitung bereit ist, so dass in diesem Fall der Zeitversatz Δₜ im wesentlichen lediglich gleich der Zeitdauer zwischen der Übertragung zweier aufeinanderfolgender Datenblöcke auf dem Bus ist, der mit dem Dateneingang 16 verbunden ist. In diesem Fall würden also die ersten beiden Datenblöcke B₁ und B₂ des Eingangsdatenstromes unmittelbar an die Verschlüsselungseinheit und die Entschlüsselungseinheit 12, 14 mit einem geringfügigen Versatz in der Größenordnung der Dauer der Übertragung der einzelnen Datenblöcke auf dem Bus an die Verschlüsselungseinheit 12 und Entschlüsselungseinheit 14 übertragen werden, woraufhin die Vorrichtung 10 das Freigabesignal vorübergehend deaktivieren würde, bis die Verschlüsselungseinheit 12 wieder aufnahmefähig ist, usw.

Nachdem im vorhergehenden die Vorrichtung 10 von Fig. 1 in Hinblick auf die Verschlüsselung beschrieben worden ist, wird Bezug nehmend auf Fig. 3 derjenige Teil der Vorrichtung 10 beschrieben, der an der Entschlüsselung beteiligt ist. Gezeigt sind wiederum die Verschlüsselungseinheit 12 und die Entschlüsselungseinheit 14 der Vorrichtung 10. Obwohl als Dateneingang für die zu entschlüsselnden Datenblöcke derselbe Eingang verwendet werden könnte, wie bei Fig. 1 für die zu verschlüsselnden Datenblöcke, ist in Fig. 3 ein Dateneingang der Vorrichtung 10 für die zu entschlüsselnden Datenblöcke mit einem neuen Bezugszeichen versehen, nämlich mit 40. Auch der Datenausgang der Vorrichtung ist in Fig. 3 mit einem neuen Bezugszeichen versehen, nämlich mit 42, an welchem die entschlüsselten Datenblöcke ausgegeben werden. Freilich wäre es auch möglich, für die Ausgabe der entschlüsselten Datenblöcke denselben Ausgang zu verwenden, wie in Fig. 1 für die verschlüsselten Datenblöcke, nämlich den Datenausgang 18.

Der Dateneingang 40 der Vorrichtung 10 ist über einen Schalter 43 mit entweder dem Verschlüsselungseingang der Verschlüsselungseinheit 12 oder dem Entschlüsselungseingang der Entschlüsselungseinheit 14 verbunden. Wie es noch erörtert werden wird, wird der Schalter 43 ebenso wie der Schalter 20 von Fig. 1 gesteuert, um die ankommenden, zu entschlüsselnden Datenblöcke abwechselnd der Ver- bzw. Entschlüsselungseinheit 12 bzw. 14 zuzuführen. Die Ausgänge der Einheiten 12 und 14 sind wieder über eine Vereinigungseinrichtung 44 mit dem Datenausgang 42 der Vorrichtung 10 verbunden, welcher aus den an den Ausgängen der Einheiten 12 und 14 ausgegebenen Datenblöcken einen einheitlichen Datenstrom von entschlüsselten Datenblöcken generiert.

Nachdem im vorhergehenden der Aufbau der Vorrichtung 10 in Hinblick auf den für die Entschlüsselung eines Chiffre-Datenstroms relevanten Teil beschrieben worden ist, wird dessen Funktionsweise bei der Entschlüsselung beschrieben. An dem Dateneingang 40 werden die zu entschlüsselnden Datenblöcke seriell in einem Chiffre-Datenstrom zugeführt. In Fig. 3 wird angenommen, dass es sich bei dem zu entschlüsselnden Datenstrom um den in Fig. 1 generierten Chiffre-Datenstrom handelt, nämlich um C₁, C₂', C₃, C₄' , ... Diese Datenblöcke stellen beispielsweise die verschlüsselten Daten einer Seite eines Speichers dar, die ausgelesen werden soll.

Der Schalter 43 verteilt nun die ankommenden Datenblöcke abwechselnd an entweder die Verschlüsselungseinheit 14 oder die Verschlüsselungseinheit 12. An welchen der Einheiten 12 oder 14 der Schalter 43 den ersten Datenblock lenken soll, erfährt er über ein Steuersignal von einer Steuereinrichtung (nicht gezeigt). Diese Steuereinrichtung weiß, welcher der Datenblöcke durch die Verschlüsselungseinheit 12 verschlüsselt worden ist (ungestrichene C's), und welche durch die Entschlüsselungseinheit 14 "verschlüsselt" worden sind (gestrichene C's), nämlich nach vorbestimmten Regeln, einem vorbestimmten Protokoll, einer Norm, einem Standard oder dergleichen, wie es im vorhergehenden kurz skizziert wurde.

Im vorliegenden Fall wird der Schalter 43 derart gesteuert, dass er den ersten der ankommenden Datenblöcke an die Entschlüsselungseinheit 14 weiterleitet, da dieser Datenblock, nämlich C₁, durch die Verschlüsselungseinheit 12 erzeugt worden ist. Die Entschlüsselungseinheit 14 erhält also aufeinanderfolgend die Folge von Datenblöcken C₁, C₃, ... Andererseits erhält die Verschlüsselungseinheit 12 die Folge von Datenblöcken C₂' , C₄', ...

Die Entschlüsselungseinheit 14 bildet nun alle an ihrem Entschlüsselungseingang ankommenden Datenblöcke Block für Block gemäß der Entschlüsselungsabbildung **D** auf das entsprechende Entschlüsselungsergebnis darstellende Datenblöcke ab, nämlich C₁ auf **D**(C₁) - **D**(**E**(B₁)) = B1, C₃ auf **D**(C₃) - **D**(**E**(B₃)) .... Die Entschlüsselungseinheit 14 erzeugt also, da sie ja die inverse Abbildung zur Verschlüsselungsabbildung durchführt, die ankommenden Chiffre-Datenblöcke auf entsprechende Klartext-Datenblöcke B₁, B₃ ab und gibt dieselben an ihren Entschlüsselungsausgang aus.

Die übrigen Datenblöcke des Chiffre-Datenstromes, nämlich C₂', C₄' , ... werden nun natürlich der Verschlüsselungseinheit 12 zugeführt, da diese ja gemäß dem Ausführungsbeispiel von Fig. 1 durch die Entschlüsselungseinheit 14 "verschlüsselt" worden sind. Dementsprechend werden sie nur durch die Verschlüsselungseinheit 12 "entschlüsselt". Die Verschlüsselungseinheit 12 bildet jeden ankommenden Datenblock an ihrem Verschlüsselungseingang gemäß der Verschlüsselungsabbildung **E** auf einen ein Verschlüsselungsergebnis darstellenden Datenblock ab, hier in dem Fall also den Chiffre-Datenblock C₂' auf **E**(C₂') - **E**(**D**(B₂) ) = B₂, den Chiffre-Datenblock C₄' auf **E**(C₄') = **E**(**D**(B₄) ) = B₄, usw. Diese werden dann am Verschlüsselungsausgang der Verschlüsselungseinheit ausgegeben.

Die von den Einheiten 12 und 14 ausgegebenen Datenblöcke stellen folglich wieder die Klartext-Datenblöcke B₁ ... B_{N} dar. Sie werden in der Vereinigungseinrichtung 44 zu einem einheitlichen Klartext-Datenstrom zusammengeführt und am Datenausgang 42 ausgegeben.

Auch an der Bezug nehmend auf Fig. 3 beschriebenen Entschlüsselung sind Verschlüsselungseinheit 12 und Entschlüsselungseinheit 14 gleichermaßen beteiligt, so dass auch hier durch die parallele Verarbeitung paarweise aufeinanderfolgender Datenblöcke die Gesamtentschlüsselungszeitdauer verglichen zu der Ver-/Entschlüsselungsvorrichtung von Fig. 5 im wesentlichen halbiert werden kann.

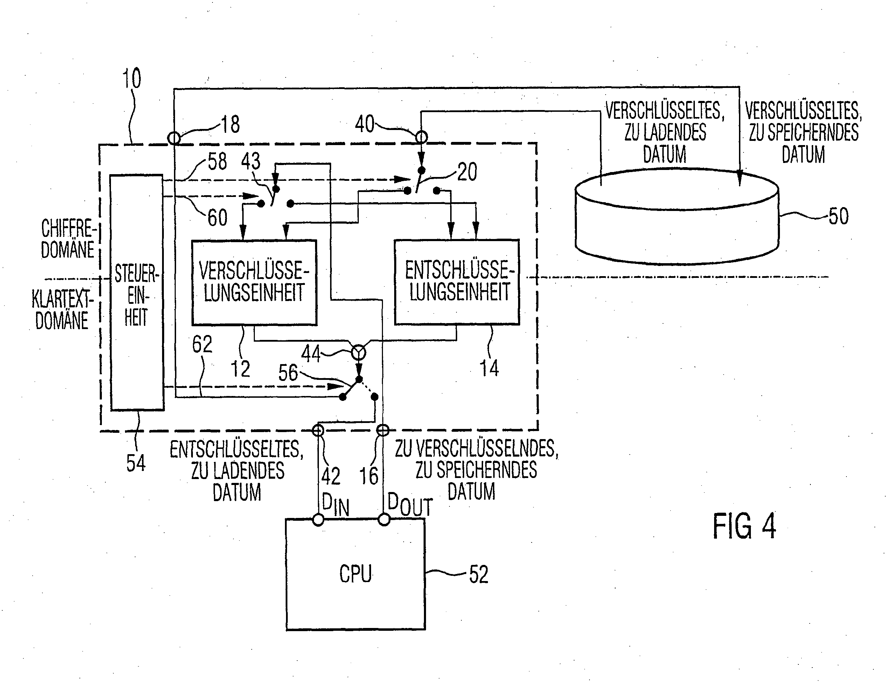

In Fig. 4 ist ein Ausführungsbeispiel für eine Anwendung der Vorrichtung 10 von Fig. 1 und 3 gezeigt. Bei diesem Ausführungsbeispiel ist die Ver-/Entschlüsselungsvorrichtung für die verschlüsselte Speicherung von Daten auf einem Speicher 50 zuständig. Die zu speichernden Daten werden von einer CPU 52 aus auf dem Speicher 50 gespeichert und von der CPU 52 von dem Speicher 50 gelesen. Die Vorrichtung 10 bildet die Schnittstelle zwischen Speicher 50 und CPU 52. Der Teil von der Vorrichtung 10 bis zum Speicher 50 ist die Chiffre-Domain, in der die Daten lediglich in verschlüsselter Form vorliegen, während der Teil zwischen Vorrichtung 10 und CPU 52 die Klartext-Domain ist, in der die Daten im Klartext vorliegen. Ein Angreifer, der den Speicher 50 ausliest, gelangt folglich lediglich zu Informationen in verschlüsselter Form, was für denselben einen sehr hohen Aufwand zum Ausspähen dieser Informationen darstellte.

In Fig. 4 sind neben den Elementen der Ver-/Entschlüsselungsvorrichtung 10, die bereits in Fig. 1 und 3 gezeigt worden sind, ferner eine Steuereinheit 54 und ein Schalter 56 der Vorrichtung 10 gezeigt. Der Schalter 56 ist zwischen den Ausgang der Vereinigungseinrichtung 44 und den Datenausgang 42 der Vorrichtung 10 einerseits und den Datenausgang der Vereinigungseinrichtung 44, die in diesem Fall zu der Vereinigungseinrichtung 22 von Fig. 1 identisch ist, und dem Datenausgang 18 andererseits geschaltet, um die das Ver- bzw. Entschlüsselungsergebnis darstellenden Datenblöcke von der Verschlüsselungseinheit 12 bzw. der Entschlüsselungseinheit 14 durch die Vereinigungseinrichtung 44 zu einem einheitlichen Datenstrom zusammenzufassen und diese Datenblöcke entweder an den Ausgang 42 oder den Ausgang 18 weiterzuleiten.

Die Steuereinheit 54 nimmt durch Steuersignale 58, 60 bzw. 62 Einfluss auf die Schaltvorgänge der Schalter 20, 42 und 56, wie es im nachfolgenden noch erörtert werden wird.

Der Datenausgang 18 und der Dateneingang 40 sind mit dem Speicher 50 verbunden, während der Datenausgang 42 und der Dateneingang 16 mit der CPU 52 verbunden sind.

Nachdem im vorhergehenden der Aufbau der Anordnung von Ver-/Entschlüsselungsvorrichtung 10, Speicher 50 und CPU 52 beschrieben worden ist, wird im folgenden die Funktionsweise der gesamten Anordnung beschrieben. Zunächst wird der Vorgang betrachtet, dass die CPU 52 zu verschlüsselnde, zu speichernde Daten an ihren Datenausgang Dₒᵤₜ ausgibt, um dieselben auf dem Speicher 50 zu speichern. Über den Dateneingang 16 der Vorrichtung 10 gelangen diese Daten dann an den Schalter 43. Wie Bezug nehmend auf Fig. 1 beschrieben, steuert dann die Steuereinheit 54 den Schalter 43 derart, dass sie einen Teil der Daten an die Verschlüsselungseinheit und einen anderen Teil der Daten an die Entschlüsselungseinheit leitet. Die derart mit unterschiedlichen Verschlüsselungsabbildungen "E" bzw. "D" verschlüsselten Teile werden dann durch die Vereinigungseinrichtung 44 zu einem einheitlichen Datenstrom zusammengefügt. Die Steuereinheit 54 steuert den Schalter 56 derart, dass dieser zusammengefügte, nun in verschlüsselter Form vorliegende Datenstrom an den Datenausgang 18 ausgegeben wird. Die Daten am Datenausgang 18 sind folglich die verschlüsselten, zu speichernden Daten. Diese gelangen über den Datenausgang 18 an den Speicher 50, der diese dann in verschlüsselter Form an entsprechendem Ort speichert.

Zu einem späteren Zeitpunkt kann beispielsweise die CPU 52 bei Abarbeitung eines Programms, wie z.B. einer Applikation, einen Ladebefehl abarbeiten, der anweist, die soeben gespeicherten Daten wieder auszulesen und beispielsweise in ein bestimmtes internes Register zu laden. Die CPU 52 weist also den Speicher 50 auf geeignet Weise (hier nicht dargestellt) an, die entsprechenden Daten wieder auszulesen. Der Speicher 50 gibt daraufhin die verschlüsselten, zu ladenden Daten an den Dateneingang 40 der Vorrichtung 10 aus. Wie es im vorhergehenden Bezug nehmend auf Fig. 3 beschrieben worden ist, steuert die Steuereinheit 54 den Schalter 20 derart, dass derselbe die ankommenden verschlüsselten, zu ladenden Daten teils an die Verschlüsselungseinheit 12 und teils an die Entschlüsselungseinheit 14 weiterleitet. Die sich an den Ausgängen derselben ergebenden, ein Verschlüsselungs- bzw. Entschlüsselungsergebnis darstellenden Teile werden durch die Vereinigungseinrichtung 44 wieder zu einem einheitlichen Datenstrom zusammengefügt. Die Steuereinheit 54 steuert den Schalter 56 bei diesem Ladevorgang derart, dass er den Ausgang der Vereinigungseinrichtung 44 mit dem Datenausgang 42 verbindet (dargestellt durch eine gestrichelte Linie). Die entschlüsselten, zu ladenden Daten werden also über den Schalter 56 und den Datenausgang 52 an den Dateneingang D_{IN} der CPU 52 weitergeleitet, welche dieselbe dann auf bekannte Art und Weise in entsprechende Register lädt, dabei vorher noch einer Addition unterzieht oder dergleichen, um sie in nun in Klartext vorliegender Form weiter zu verarbeiten.

Wie im vorhergehenden Bezug nehmend auf Fig. 2a bzw. 2b beschrieben, ermöglicht es das Ausführungsbeispiel von Fig. 4, die Datendurchsatzrate bei den Lese- und Schreibvorgängen zu verdoppeln.

Das Ausführungsbeispiel von Fig. 4 lässt sich insbesondere auf den externen Bus des 88er Mikrocontrollers anwenden mit seinem speziellen Bus-Timung. Die Methode lässt sich aber auch in Standardbussysteme integrieren, wie das im vorhergehenden erwähnte AMBA-Bussystem.

Das Ausführungsbeispiel von Fig. 4 ermöglicht folglich für den Schreibevorgang als auch für den Lesevorgang beide Teile der Ver-/Entschlüsselungsvorrichtung gleichzeitig zu benutzen. Im Grunde entspricht das einer neuen Definition von Verschlüsselung, wie sie ja genauer bereits Bezug nehmend auf Fig. 1 und 3 beschrieben worden ist, die als Speicher- bzw. Memory-Verschlüsselung bezeichnet werden könnte. Die zu verschlüsselnden Daten werden blockweise und der Reihe nach bzw. sequentiell über einen Bus, nämlich demjenigen zwischen dem Dateneingang 16 und dem Datenausgang Dₒᵤₜ, der Ver/Entschlüsselungsvorrichtung 10 zugeführt. Die Hälfte der eintreffenden Blöcke wird nun verschlüsselt, d.h. im Verschlüsselungsteil 12 verarbeitet, während die andere Hälfte der Blöcke "entschlüsselt" wird, was, wie im vorhergehenden ja näher erörtert, bedeutet, dass diese Blöcke durch den Entschlüsselungsteil 14 laufen. Die ausgegebenen Blöcke der Einheit 12 und 14 bilden das Memory- bzw. Speicher-Chiffrat. Beim Lesevorgang passiert etwas Analoges: die Blöcke, die zuvor durch den Verschlüsselungsteil 12 liefen, werden nun dem Entschlüsselungsteil 14 zugeführt. Die Blöcke, die zuvor durch den Entschlüsselungsteil 14 liefen, werden nun durch den Verschlüsselungsteil 12 geschickt. Danach liegen alle Blöcke wieder im Klartext vor. Diesen Vorgang, der also beim Laden auftritt, kann als Memory- bzw. Speicher-Dechiffrierung bezeichnet werden.

Die im vorhergehenden Bezug nehmend auf die Ausführungsbeispiele beschriebene gleichzeitige Nutzung der Verschlüsselungs- und Entschlüsselungshardware ermöglicht folglich die Verdoppelung der Datendurchsatzrate, ohne dabei die Sicherheit der gesamten "Datenverschlüsselung" zu verringern.

Bezug nehmend auf die vorhergehenden Ausführungsbeispiele wird noch darauf hingewiesen, dass die vorliegende Erfindung nicht nur in Verbindung mit der verschlüsselten Speicherung anwendbar ist. Die Kombination aus CPU 52 und Ver-/Entschlüsselungsvorrichtung 10 könnte auch mit einem weiteren Gerät aus Ver-/Entschlüsselungsvorrichtung und CPU verbunden sein, wie z.B. einem Kommunikationspartner, wie z.B. zwei kommunizierende Telefone, ein Terminal und eine Chipkarte, eine Zentrale und eine Teilnehmer-Smartcard eines Zugriffskontrollsystems oder dergleichen. Die Ver-/Entschlüsselungsvorrichtungen bildeten die Schnittstelle zum gemeinsamen Kommunikationsweg, der die Chiffre-Domain darstellte. Der Datenausgang 18 der einen Ver-/Entschlüsselungsvorrichtung wäre mit dem Dateneingang 40 der anderen Ver-/Entschlüsselungsvorrichtung verbunden und umgekehrt. Will ein Mikrocontroller bzw. eine CPU Informationen an den anderen Kommunikationspartner bzw. die andere CPU senden, so tut sie das über den Datenausgang 18. Geeignete gemeinsame vorbestimmte Vorschriften ermöglichen es dem anderen Kommunikationspartner bzw. der gegenüberliegenden Ver-/Entschlüsselungsvorrichtung zu wissen, welche Teile des kommunizierten Chiffre-Datenstroms durch die Verschlüsselungseinheit und welche durch die Entschlüsselungseinheit "verschlüsselt" worden sind.

Es sollte klar sein, dass in dem Fall fester Kommunikationspartner, bei denen immer einer Empfänger und der andere Sender ist, der eine nur eine Steuerung in der Ver/Entschlüsselungsvorrichtung benötigt, die die beispielsweise bezugnehmend auf Fig. 1 beschriebene Verschlüsselung durchführen kann, während der Empfänger nur eine Steuerung benötigt, die die beispielsweise bezugnehmend auf Fig. 3 beschriebene Entschlüsselung durchführen kann.

Insgesamt liefern folglich die vorhergehenden Ausführungsbeispiele eine Bus- und Hardware-angepasste Verschlüsselungsdefinition, die durch die parallele Verarbeitungsmöglichkeit auf vielen Anwendungsgebieten aufgrund ihrer Performancesteigerung zu einer Steigerung der Nachfrage führen wird.

Wie es im vorhergehenden schon kurz angedeutet wurde, ist es ferner möglich, denselben Dateneingang und denselben Datenausgang zum Empfang der bereits verschlüsselten, zu entschlüsselnden und der zu verschlüsselnden, noch unverschlüsselten Daten bzw. zur Ausgabe der verschlüsselten und entschlüsselten Daten zu verwenden. Der Steuereinheit der Ver-/Entschlüsselungsvorrichtung würde dann durch ein Signal beispielsweise mitgeteilt werden, ob Verschlüsselung oder Entschlüsselung durchzuführen ist. In dem Fall von Fig. 4 könnte beispielsweise Dateneingang 16 und Dateneingang 40 zusammengelegt werden und dementsprechend auch Datenausgang 18 mit Datenausgang 42. Wenn die CPU dann einen Speichervorgang startet, würde sie dies der Steuereinheit 54 entsprechend mitteilen, so dass sie die Steuerung des Eingangsschalters 20 bzw. 42 entsprechend vornimmt. Hat die CPU 52 umgekehrt einen Speichervorgang aktiviert, woraufhin der Speicher verschlüsselte Daten an die Vorrichtung 10 ausgibt, teilt die CPU 52 dies entsprechend mit einem sich von unterscheidenden Signal der Steuereinheit 54 mit, die daraufhin den Eingangsschalter genau anders herum steuert. Der gemeinsame Datenausgang, an dem ja entweder entschlüsselte Daten oder verschlüsselte Daten ausgegeben werden, könnte an einem Bus anliegen, an welchem zusammen mit den Daten noch Informationen über deren Ziel bzw. Adressaten mitgeliefert werden oder dergleichen.

Ferner wird darauf hingewiesen, dass abweichend von der vorhergehenden Beschreibung zu verschlüsselnden Daten auch anders aufgeteilt werden können als jeweils abwechselnd in gleich große Teile.

Insbesondere wird darauf hingewiesen, dass abhängig von den Gegebenheiten das erfindungsgemäße Schema zur Ver/Entschlüsselung auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

### Bezugszeichenliste

- 10: Ver-/Entschlüsselungsvorrichtung
- 12: Verschlüsselungseinheit
- 14: Entschlüsselungseinheit
- 16: Dateneingang
- 18: Datenausgang
- 20: Schalter
- 22: Vereinigungseinrichtung
- 30a, 30b, 30c: Zeitblöcke
- 32a, 32b, 32c: Zeitblöcke
- 34a, 34b, 34c: Zeitblöcke
- 40: Dateneingang
- 42: Datenausgang
- 43: Schalter
- 44: Vereinigungseinrichtung
- 50: Speicherarrays
- 52: CPU
- 54: Steuereinheit
- 56: Schalter
- 58, 60 und 62: Steuersignale

## Patentansprüche

1. Vorrichtung zum Verschlüsseln von zu verschlüsselnden Daten in verschlüsselte Daten und Entschlüsseln von zu entschlüsselnden Daten in entschlüsselte Daten, mit
einer ersten Einheit (12) zum Umsetzen eines Verschlüsselungsalgorithmus, die einen ersten Dateneingang und einen ersten Datenausgang aufweist, zum Abbilden von Daten, die an dem ersten Dateneingang anliegen, auf ein Verschlüsselungsergebnis am ersten Datenausgang gemäß einer Verschlüsselungsabbildung;
einer zweiten Einheit zum Umsetzen eines Entschlüsselungsalgorithmus, die einen zweiten Dateneingang und einen zweiten Datenausgang aufweist, zum Abbilden von Daten, die an dem zweiten Dateneingang anliegen, auf ein Entschlüsselungsergebnis am zweiten Datenausgang gemäß einer Entschlüsselungsabbildung, die zu der Verschlüsselungsabbildung invers ist; und
einer Steuereinrichtung (54) zum
in dem Fall, dass die Vorrichtung eine Verschlüsselung durchführen soll, Anlegen eines Teils der zu verschlüsselnden Daten an den ersten Dateneingang und einen zweiten von dem ersten unterschiedlichen Teil der zu verschlüsselnden Daten an den zweiten Dateneingang, um die verschlüsselten Daten zu erhalten, und
in dem Fall, dass die Vorrichtung eine Entschlüsselung durchführen soll, Anlegen eines Teils der zu entschlüsselnden Daten an den zweiten Dateneingang und eines zweiten von dem ersten unterschiedlichen Teil der zu entschlüsselnden Daten an den ersten Dateneingang, um die entschlüsselten Daten zu erhalten.

2. Vorrichtung gemäß Anspruch 1, die mit einem Speicher (50) koppelbar ist, um die verschlüsselten Daten auf den Speicher (50) zu schreiben und die zu entschlüsselnden Daten von dem Speicher (50) zu lesen.

3. Vorrichtung gemäß Anspruch 2, wobei die Vorrichtung entworfen ist, um eine Verschlüsselung durchzuführen, wenn die zu verschlüsselnden Daten auf dem Speicher (50) gespeichert werden sollen, und eine Entschlüsselung durchzuführen, wenn die zu entschlüsselnden Daten von dem Speicher (50) gelesen werden sollen.

4. Vorrichtung gemäß einem der Ansprüche 1 bis 3, bei der die Steuereinrichtung (54) entworfen ist, um den ersten Teil und den zweiten Teil der zu verschlüsselnden Daten bzw. der zu entschlüsselnden Daten dem ersten bzw. zweiten Dateneingang derart zuzuführen, dass sich eine Verarbeitungszeitdauer der ersten Einheit (12) und eine Verarbeitungseinheit der zweiten Einheit (14) überlappen.

5. Vorrichtung gemäß einem der Ansprüche 1 bis 4, bei der die Steuereinrichtung (54) eine Einrichtung (20) zum Aufteilen der zu verschlüsselnden Daten in den ersten Teil und den zweiten Teil aufweist und eine Einrichtung (42) zum Aufteilen der zu entschlüsselnden Daten in den ersten Teil und den zweiten Teil.

6. Vorrichtung gemäß einem der Ansprüche 1 bis 4, bei der die Steuereinrichtung (54) eine Einrichtung (20) zum Aufteilen der zu verschlüsselnden Daten in den ersten Teil und den zweiten Teil aufweist und eine Einrichtung (42) zum Aufteilen der zu entschlüsselnden Daten in den ersten Teil und den zweiten Teil, wobei die Einrichtungen zum Aufteilen entworfen sind, um die Aufteilung so vorzunehmen, dass der erste und der jeweilige zweite Teil eine vorbestimmte Größe aufweisen, wobei die Steuereinrichtung (54) ausgebildet ist, um die Aufteilung und das Anlegen zu wiederholen, falls den zu verschlüsselnden bzw. zu entschlüsselnden Daten weitere folgen.

7. Vorrichtung zum Verschlüsseln von zu verschlüsselnden Daten in verschlüsselte Daten, mit
einer ersten Einheit zum Umsetzen eines Verschlüsselungsalgorithmus, die einen ersten Dateneingang und einen ersten Datenausgang aufweist, zum Abbilden von Daten, die an dem ersten Dateneingang anliegen, auf ein Verschlüsselungsergebnis am ersten Datenausgang gemäß einer Verschlüsselungsabbildung;
einer zweiten Eeinheit zum Umsetzen eines Entschlüsselungsalgorithmus, die einen zweiten Dateneingang und einen zweiten Datenausgang aufweist, zum Abbilden von Daten, die an dem zweiten Dateneingang anliegen, auf ein Entschlüsselungsergebnis am zweiten Datenausgang gemäß einer Entschlüsselungsabbildung, die zu der Verschlüsselungsabbildung invers ist; und
einer Steuereinrichtung zum Anlegen eines Teils der zu verschlüsselnden Daten an den ersten Dateneingang und einen zweiten von dem ersten unterschiedlichen Teil der zu verschlüsselnden Daten an den zweiten Dateneingang, um die verschlüsselten Daten zu erhalten.

8. Vorrichtung zum Entschlüsseln von zu entschlüsselnden Daten in entschlüsselte Daten, mit
einer ersten Einheit (12) zum Umsetzen eines Verschlüsselungsalgorithmus, die einen ersten Dateneingang und einen ersten Datenausgang aufweist, zum Abbilden von Daten, die an dem ersten Dateneingang anliegen, auf ein Verschlüsselungsergebnis am ersten Datenausgang gemäß einer Verschlüsselungsabbildung;
einer zweiten Entschlüsselungseinheit zum Umsetzen eines Entschlüsselungsalgorithmus, die einen zweiten Dateneingang und einen zweiten Datenausgang aufweist, zum Abbilden von Daten, die an dem zweiten Dateneingang anliegen, auf ein Entschlüsselungsergebnis am zweiten Datenausgang gemäß einer Entschlüsselungsabbildung, die zu der Verschlüsselungsabbildung invers ist; und
einer Steuereinrichtung zum Anlegen eines Teils der zu entschlüsselnden Daten an den zweiten Dateneingang und eines zweiten von dem ersten unterschiedlichen Teil der zu entschlüsselnden Daten an den ersten Dateneingang, um die entschlüsselten Daten zu erhalten.

9. Verfahren zum Verschlüsseln von zu verschlüsselnden Daten in verschlüsselte Daten auf der Basis einer ersten Einheit zum Umsetzen eines Verschlüsselungsalgorithmus, die einen ersten Dateneingang und einen ersten Datenausgang aufweist, zum Abbilden von Daten, die an dem ersten Dateneingang anliegen, auf ein Verschlüsselungsergebnis am ersten Datenausgang gemäß einer Verschlüsselungsabbildung, und einer zweiten Einheit zum Umsetzen eines Entschlüsselungsalgorithmus, die einen zweiten Dateneingang und einen zweiten Datenausgang aufweist, zum Abbilden von Daten, die an dem zweiten Dateneingang anliegen, auf ein Entschlüsselungsergebnis am zweiten Datenausgang gemäß einer Entschlüsselungsabbildung, die zu der Verschlüsselungsabbildung invers ist, mit folgenden Schritten:
Anlegen eines Teils der zu verschlüsselnden Daten an den ersten Dateneingang und einen zweiten von dem ersten unterschiedlichen Teil der zu verschlüsselnden Daten an den zweiten Dateneingang, um die verschlüsselten Daten zu erhalten.

10. Verfahren zum Entschlüsseln von zu entschlüsselnden Daten in entschlüsselte Daten, auf der Basis einer Ersten Einheit zum Umsetzen eines Verschlüsselungsalgorithmus, die einen ersten Dateneingang und einen ersten Datenausgang aufweist, zum Abbilden von Daten, die an dem ersten Dateneingang anliegen, auf ein Verschlüsselungsergebnis am ersten Datenausgang gemäß einer Verschlüsselungsabbildung, und einer zweiten Einheit zum Umsetzen eines Entschlüsselungsalgorithmus, die einen zweiten Dateneingang und einen zweiten Datenausgang aufweist, zum Abbilden von Daten, die an dem zweiten Dateneingang anliegen, auf ein Entschlüsselungsergebnis am zweiten Datenausgang gemäß einer Entschlüsselungsabbildung, die zu der Verschlüsselungsabbildung invers ist, mit folgenden Schritten:
Anlegen eines Teils der zu entschlüsselnden Daten an den zweiten Dateneingang und eines zweiten von dem ersten unterschiedlichen Teil der zu entschlüsselnden Daten an den ersten Dateneingang, um die entschlüsselten Daten zu erhalten.

11. Computer-Programm mit einem Programmcode zur Durchführung des Verfahrens nach Anspruch 9 oder 10, wenn das Computer-Programm auf einem Computer abläuft.

## Claims

1. Apparatus for encrypting data that are to be encrypted to produce encrypted data and decrypting data that are to be decrypted to produce decrypted data, having
a first unit (12) for implementing an encryption algorithm, which unit has a first data input and a first data output, for mapping data that are applied to the first data input onto an encryption result at the first data output on the basis of an encryption map;
a second unit for implementing a decryption algorithm, which unit has a second data input and a second data output, for mapping data that are applied to the second data input onto a decryption result at the second data output on the basis of a decryption map, which is the inverse of the encryption map; and
a control device (54) for,
in the event of the apparatus needing to perform encryption, applying a portion of the data that are to be encrypted to the first data input and a second portion, different from the first, of the data that are to be encrypted to the second data input in order to obtain the encrypted data, and, in the event of the apparatus needing to perform decryption, applying a portion of the data that are to be decrypted to the second data input and a second portion, different from the first, of the data that are to be decrypted to the first data input in order to obtain the decrypted data.

2. Apparatus according to Claim 1, which can be coupled to a memory (50) in order to write the encrypted data to the memory (50) and to read the data that are to be decrypted from the memory (50).

3. Apparatus according to Claim 2, wherein the apparatus is designed to perform encryption when the data that are to be encrypted need to be stored in the memory (50) and to perform decryption when the data that are to be decrypted need to be read from the memory (50).

4. Apparatus according to one of Claims 1 to 3, in which the control device (54) is designed to supply the first portion and the second portion of the data that are to be encrypted or of the data that are to be decrypted to the first or the second data input such that a processing period of the first unit (12) and a processing unit of the second unit (14) overlap.

5. Apparatus according to one of Claims 1 to 4, in which the control device (54) has a device (20) for splitting the data that are to be encrypted into the first portion and the second portion and a device (42) for splitting the data that are to be decrypted into the first portion and the second portion.

6. Apparatus according to one of Claims 1 to 4, in which the control device (54) has a device (20) for splitting the data that are to be encrypted into the first portion and the second portion and a device (42) for splitting the data that are to be decrypted into the first portion and the second portion, wherein the devices for splitting are designed to perform the splitting such that the first and the respective second portion have a predetermined magnitude, wherein the control device (54) is designed to repeat the splitting and the application if the data that are to be encrypted or to be decrypted are followed by further data.

7. Apparatus for encrypting data that are to be encrypted to produce encrypted data, having
a first unit for implementing an encryption algorithm, which unit has a first data input and a first data output, for mapping data that are applied to the first data input onto an encryption result at the first data output on the basis of an encryption map;
a second unit for implementing a decryption algorithm, which unit has a second data input and a second data output, for mapping data that are applied to the second data input onto a decryption result at the second data output on the basis of a decryption map, which is the inverse of the encryption map; and
a control device for applying a portion of the data that are to be encrypted to the first data input and a second portion, different from the first, of the data that are to be encrypted to the second data input in order to obtain the encrypted data.

8. Apparatus for decrypting data that are to be decrypted to produce decrypted data, having
a first unit (12) for implementing an encryption algorithm, which unit has a first data input and a first data output, for mapping data that are applied to the first data input onto an encryption result at the first data output on the basis of an encryption map;
a second decryption unit for implementing a decryption algorithm, which unit has a second data input and a second data output, for mapping data that are applied to the second data input onto a decryption result at the second data output on the basis of a decryption map, which is the inverse of the encryption map; and
a control device for applying a portion of the data that are to be decrypted to the second data input and a second portion, different from the first, of the data that are to be decrypted to the first data input in order to obtain the decrypted data.

9. Method for encrypting data that are to be encrypted to produce encrypted data on the basis of a first unit for implementing an encryption algorithm, which unit has a first data input and a first data output, for mapping data that are applied to the first data input onto an encryption result at the first data output on the basis of an encryption map, and a second unit for implementing a decryption algorithm, which unit has a second data input and a second data output, for mapping data that are applied to the second data input onto a decryption result at the second data output on the basis of a decryption map, which is the inverse of the encryption map, having the following steps:
applying a portion of the data that are to be encrypted to the first data input and applying a second portion, different from the first, of the data that are to be encrypted to the second data input in order to obtain the encrypted data.

10. Method for decrypting data that are to be decrypted to produce decrypted data on the basis of a first unit for implementing an encryption algorithm, which unit has a first data input and a first data output, for mapping data that are applied to the first data input onto an encryption result at the first data output on the basis of an encryption map, and a second unit for implementing a decryption algorithm, which unit has a second data input and a second data output, for mapping data that are applied to the second data input onto a decryption result at the second data output on the basis of a decryption map, which is the inverse of the encryption map, having the following steps:
applying a portion of the data that are to be decrypted to the second data input and applying a second portion, different from the first, of the data that are to be decrypted to the first data input in order to obtain the decrypted data.

11. Computer program having a program code for carrying out the method according to Claim 9 or 10 when the computer program is executed on a computer.

## Revendications

1. Dispositif de chiffrement en données chiffrées de données à déchiffrer et de déchiffrement en données déchiffrées de données à déchiffrer, comprenant
une première unité (12) de mise en oeuvre d'un algorithme de chiffrement, qui a une première entrée de données et une première sortie de données, pour reproduire des données, qui s'appliquent à la première entrée de données, sur un résultat de chiffrement à la première sortie de données suivant une reproduction de chiffrement ;
une deuxième unité de mise en oeuvre d'un algorithme de déchiffrement, qui a une deuxième entrée de données et une deuxième sortie de données, pour reproduire des données, qui s'appliquent à la deuxième entrée de données, sur un résultat de déchiffrement à la deuxième sortie de données suivant une reproduction de déchiffrement qui est l'inverse de la reproduction de chiffrement ; et
un dispositif (54) de commande pour
dans le cas où le dispositif doit effectuer un chiffrement, appliquer une partie des données à chiffrer à la première entrée de données et une deuxième partie, différente de la première, des données à chiffrer à la deuxième entrée de données pour obtenir les données chiffrées et
dans le cas où le dispositif doit effectuer un déchiffrement, appliquer une partie des données à déchiffrer à la deuxième entrée de données, et une deuxième partie, différente de la première, des données à déchiffrer à la première entrée de données pour obtenir les données déchiffrées.

2. Dispositif suivant la revendication 1, qui peut être accouplé à une mémoire (50) pour écrire les données chiffrées dans la mémoire (50) et pour lire dans la mémoire (50) les données à déchiffrer.

3. Dispositif suivant la revendication 2, dans lequel le dispositif est conçu pour effectuer un chiffrement si les données à chiffrer doivent être mémorisées dans la mémoire (50) et pour effectuer un déchiffrement si les données à déchiffrer doivent être lues dans la mémoire (50).

4. Dispositif suivant l'une des revendications 1 à 3, dans lequel le dispositif (54) de commande est conçu pour envoyer à la première ou à la deuxième entrée de données la première partie et la deuxième partie des données à chiffrer ou des données à déchiffrer de manière à ce qu'une durée de traitement de la première unité (12) et une unité de traitement de la deuxième unité (14) se superposent.

5. Dispositif suivant l'une des revendications 1 à 4, dans lequel le dispositif (54) de commande a un dispositif (20) de répartition des données à chiffrer en la première partie et en la deuxième partie et un dispositif (42) de répartition des données à déchiffrer en la première partie et en la deuxième partie.

6. Dispositif suivant l'une des revendications 1 à 4, dans lequel le dispositif (54) de commande a un dispositif (20) de répartition des données à chiffrer en la première partie et en la deuxième partie et un dispositif (42) de répartition des données à déchiffrer en la première partie et en la deuxième partie, les dispositifs de répartition étant conçus pour effectuer la répartition de manière à ce que la première et respectivement la deuxième partie ait une dimension déterminée à l'avance, le dispositif (54) de commande étant constitué pour répéter la répartition et l'application si d'autres données suivent les données à chiffrer ou à déchiffrer.

7. Dispositif de chiffrement en données chiffrées de données à chiffrer comprenant
une première unité de mise en oeuvre d'un algorithme de chiffrement, qui a une première entrée de données et une première sortie de données, pour reproduire des données, qui s'appliquent à la première entrée de données, sur un résultat de chiffrement à la première sortie de données suivant une reproduction de chiffrement ;
une deuxième unité de mis en oeuvre d'un algorithme de déchiffrement, qui a une deuxième entrée de données et une deuxième sortie de données, pour reproduire des données, qui s'appliquent à la deuxième entrée de données, sur un résultat de déchiffrement à la deuxième sortie de données suivant une reproduction de déchiffrement qui est l'inverse de la reproduction de chiffrement ; et
un dispositif de commande pour appliquer une partie des données à chiffrer à la première entrée de données et une deuxième partie, différente de la première, des données à chiffrer à la deuxième entrée de données pour obtenir les données chiffrées.

8. Dispositif de déchiffrement en données déchiffrées de données à déchiffrer comprenant
une première unité (12) de mise en oeuvre d'un algorithme de chiffrement, qui a une première entrée de données et une première sortie de données, pour reproduire des données, qui s'appliquent à la première entrée de données, sur un résultat de chiffrement à la première sortie de données suivant une reproduction de chiffrement ;
une deuxième unité de mise en oeuvre d'un algorithme de déchiffrement, qui a une deuxième entrée de données et une deuxième sortie de données, pour reproduire des données, qui s'appliquent à la deuxième entrée de données, sur un résultat de déchiffrement à la deuxième sortie de données suivant une reproduction de déchiffrement qui est l'inverse de la reproduction de chiffrement ; et
un dispositif de commande pour appliquer une partie des données à déchiffrer à la deuxième entrée de données et une deuxième partie, différente de la première, des données à déchiffrer à la première entrée de données pour obtenir les données déchiffrées.

9. Procédé de chiffrement en données chiffrées de données à chiffrer sur la base d'une première unité de mise en oeuvre d'un algorithme de chiffrement, qui a une première entrée de données et une première sortie de données, pour reproduire des données, qui s'appliquent à la première entrée de données, sur un résultat de chiffrement à la première sortie de données suivant une reproduction de chiffrement et une deuxième unité de mise en oeuvre d'un algorithme de déchiffrement, qui a une deuxième entrée de données et une deuxième sortie de données, pour reproduire des données, qui s'appliquent à la deuxième entrée de données, sur un résultat de déchiffrement à la deuxième sortie de données suivant une reproduction de déchiffrement qui est l'inverse de la reproduction de chiffrement, comprenant les stades suivants :
application d'une partie des données à chiffrer à la première entrée de données et d'une deuxième partie, différente de la première, des données à chiffrer à la deuxième entrée de données pour obtenir les données chiffrées.

10. Procédé de déchiffrement en données déchiffrées de données à déchiffrer, sur la base d'une première unité de mise en oeuvre d'un algorithme de chiffrement, qui a une première entrée de données et une première sortie de données, pour reproduire des données, qui s'appliquent à la première entrée de données, sur un résultat de chiffrement à la première sortie de données suivant une reproduction de chiffrement et une deuxième unité de mise en oeuvre d'un algorithme de déchiffrement, qui a une deuxième entrée de données et une deuxième sortie de données, pour reproduire des données, qui s'appliquent à la deuxième entrée de données, sur un résultat de déchiffrement à la deuxième sortie de données suivant une reproduction de déchiffrement, qui est l'inverse de la reproduction de chiffrement, comprenant les stades suivants :
application d'une partie des données à déchiffrer à la deuxième entrée de données et d'une deuxième partie, différente de la première, des données à déchiffrer à la première entrée de données pour obtenir les données déchiffrées.

11. Programme d'ordinateur ayant un code de programme pour effectuer le procédé suivant la revendication 9 ou 10, lorsque le programme d'ordinateur se déroule sur un ordinateur.
